# EUROPEAN PATENT APPLICATION

(11) **EP 4 621 898 A1**
(43) Date of publication of application: **24.09.2025**
(21) Application number: 24892482.1
(22) Date of filing: 13.08.2024
(51) Int. Cl.: H01M 10/04, H01M 6/00, B23P 19/10

(54) **ASSEMBLY APPARATUS, ASSEMBLY METHOD, AND BATTERY PROCESSING DEVICE**

(30) Priority: 31.01.2024 CN 202410130078
(71) Applicant: Contemporary Amperex Technology Co., Ltd., Ningde, Fujian 352100 (CN)
(72) Inventor: CAI, Fuding, Ningde, Fujian 352100 (CN); WU, Ying, Ningde, Fujian 352100 (CN); ZHANG, Beining, Ningde, Fujian 352100 (CN)
(74) Representative: Ran, Handong
(86) International application number: PCT/CN2024/111853
(87) International publication number: WO 2025/161342

(57) **Abstract**

The present application relates to an assembling apparatus, an assembling method, and a battery processing device. The assembling apparatus includes: a carrying platform, provided with a carrying surface, the carrying surface being provided with a grabbing position; a first positioning mechanism, movably disposed on the carrying platform and configured to position the wire harness plate at the grabbing position; a second positioning mechanism disposed on one side of the carrying platform and configured to be capable of detecting a current position of a battery and assembling, according to a deviation value between the current position and a target position, the wire harness plate on the grabbing position to the battery; a conveying mechanism, including a conveying member and a jacking assembly, the jacking assembly including a tray, and a third positioning member being disposed in a protruding manner on a surface of the tray on a side facing the wire harness plate. The second positioning mechanism is further configured to be capable of moving the wire harness plate to the carrying surface from the conveying mechanism. According to the present application, after two positioning operations, the assembly precision and the assembly efficiency between the wire harness plate and the battery are improved.

## Description

### CROSS-REFERENCE

The present application refers to Chinese Patent Application No. 2024101300789 entitled "ASSEMBLING APPARATUS, ASSEMBLING METHOD, AND BATTERY PROCESSING DEVICE", filed on January 31, 2024, which is incorporated herein by reference in its entirety.

### TECHNICAL FIELD

The present application relates to the technical field of batteries, and in particular, to an assembling apparatus, an assembling method, and a battery processing device.

### BACKGROUND

During the manufacturing process of the battery, the wire harness plate needs to be assembled to the battery to form an integral structure. At present, the assembly process of the wire harness plate faces the problem of poor efficiency and low assembly precision, which affects the overall production efficiency of the battery.

### SUMMARY

Based on this, the present application provides an assembling apparatus, an assembling method, and a battery processing device.

In a first aspect, the present application provides an assembling apparatus for assembling a wire harness plate to a battery. The assembling apparatus includes:
a carrying platform, including a carrying surface for carrying the wire harness plate, the carrying surface being provided with a grabbing position;
a first positioning mechanism, movably disposed on the carrying platform and configured to position the wire harness plate at the grabbing position;
a second positioning mechanism, disposed on one side of the carrying platform and configured to be capable of detecting a current position of the battery and assembling, according to a deviation value between the current position and a target position, the wire harness plate at the grabbing position to the battery; and
a conveying mechanism, disposed on one side of the carrying platform and configured to convey the wire harness plate, the conveying mechanism including a conveying member and a jacking assembly, the conveying member being configured to convey the wire harness plate, and the jacking assembly being configured to jack the wire harness plate on the conveying member; the jacking assembly including a tray for carrying the wire harness plate, a third positioning member being disposed in a protruding manner on a surface of the tray on a side facing the wire harness plate, and the third positioning member being configured to be inserted into a positioning hole on the wire harness plate, so as to position the wire harness plate during the jacking process of the wire harness plate.

The second positioning mechanism is further configured to be capable of moving the wire harness plate to the carrying surface from the conveying mechanism.

With the aforementioned structure, the first positioning mechanism may position the wire harness plate at the grabbing position on the carrying surface, thereby realizing the first positioning step during the assembling process. Then, a current position of the battery is detected through the second positioning mechanism, and a derivation between the current position and a target position of the battery is obtained through comparison. In this case, the second positioning mechanism grabs the wire harness plate from the grabbing position and drives the wire harness plate to move. During the movement, the assembly position between the wire harness plate and the battery can be compensated according to the deviation value, thereby realizing the second positioning step during the assembly process. Finally, the assembly precision and the assembly efficiency between the wire harness plate and the battery are improved through two positioning operations.

In some embodiments, the first positioning mechanism includes a first positioning member and a second positioning member both disposed on the carrying platform, and the first positioning member and the second positioning member define, in an enclosing manner, the grabbing position.

The first positioning member is movably disposed along a first direction and is configured to drive the wire harness plate to move along the first direction; the second positioning member is movably disposed along a second direction and is configured to drive the wire harness plate to move along the second direction.

The first direction intersects with the second direction and both are parallel to the carrying surface.

By providing the first positioning member and the second positioning member, the wire harness plate can be driven to move along the first direction and the second direction, such that the wire harness plate is positioned at the grabbing position. When the second positioning mechanism grabs the wire harness plate, the wire harness plate can be connected to a designated position on the second positioning mechanism. Thus, during the subsequent process where the second positioning mechanism assembles the wire harness plate to the battery, the positional offset between the wire harness plate and the battery is reduced, thereby improving the assembly precision.

In some embodiments, the second positioning mechanism includes a moving member and a clamp disposed on the moving member. The clamp is configured to clamp the wire harness plate, and the moving member is configured to drive the clamp and the wire harness plate thereon to move.

With the aforementioned structure, the grabbing and movement of the wire harness plate can be realized, such that the automatic assembly between the wire harness plate and the battery is realized, thereby improving the assembly efficiency.

In some embodiments, the clamp includes a main body, a suction cup disposed on the main body, and a vacuum generator. The vacuum generator is configured to form a negative pressure inside the suction cup, and the suction cup is configured to suck the wire harness plate.

Through the cooperation of the suction cup and the vacuum generator, the wire harness plate can be successfully grabbed and driven to move. Moreover, through the vacuum breaking of the vacuum generator, rapid separation between the suction cup and the wire harness plate can be realized, thereby completing the placement of the wire harness plate on the battery.

In some embodiments, the second positioning mechanism further includes a range finder disposed on the clamp, and the range finder is configured to measure a distance between the clamp and the wire harness plate.

By providing the range finder, the distance between the clamp and the wire harness plate can be accurately measured, which not only enables faster absorption of the wire harness plate by the suction cup, but also enhances the stability of the suction cup in adsorbing the wire harness plate.

In some embodiments, the second positioning mechanism further includes a detecting member disposed on the clamp, and the detecting member is configured to detect the deviation value between the current position and the target position of the battery.

By providing the detecting member, the deviation value between the current position and the target position of the battery can be detected, such that the deviation value can be compensated during the process where the second positioning mechanism drives the wire harness plate to move toward the battery, thereby ensuring more precise assembly between the wire harness plate and the battery.

In some embodiments, the assembling apparatus further includes a control assembly (not shown in the drawings). The control assembly is in communication connection with the detecting member and the moving member and is configured to control, according to the deviation value, the moving member to move.

By providing the control assembly, automatic control can be realized, so as to realize the automatic movement and the automatic assembly of the wire harness plate, thereby improving the assembly efficiency.

In some embodiments, the jacking assembly includes a driving member and a jacking member. The jacking member is provided with an inclined surface and a supporting surface. The inclined surface is obliquely disposed in a vertical direction, and the supporting surface is horizontally disposed and is connected to a top end of the inclined surface.

The driving member is configured to drive the wire harness plate to climb from the inclined surface to the supporting surface.

By providing the driving member and the jacking member, the wire harness plate can be moved from the conveyor belt to the supporting surface, such that the wire harness plate is separated from the conveyor belt, and the grabbing and movement of the wire harness plate are realized without interfering with the continued conveyance of the conveyor belt. In addition, the jacking member cooperates with the driving member through the inclined surface and the supporting surface, so as to realize the jacking of the wire harness plate in the vertical direction, which can save the vertical mounting space, making the overall structure of the assembling apparatus more compact and occupy less space.

In some embodiments, the third positioning member is retractably disposed on the tray along a protruding direction thereof. With the aforementioned structure, the third positioning member can be more flexibly controlled to be inserted into or removed from the positioning hole, so as to facilitate the insertion fit and separation between the tray and the wire harness plate.

In a second aspect, the present application provides a battery processing device. The battery processing device includes the assembling apparatus as described above for assembling the wire harness plate to the battery.

In a third aspect, the present application provides an assembling method. The assembling method includes the following steps:
transferring a wire harness plate on a conveying member to a to-be-jacked position separated from the conveying member;
controlling and jacking the wire harness plate on the to-be-jacked position to a supporting surface;
controlling a third positioning member to be inserted into a positioning hole of the wire harness plate, so as to realize an insertion fit between a tray and the wire harness plate;
controlling a second positioning mechanism to move the wire harness plate to a carrying surface;
positioning the wire harness plate at a grabbing position of a carrying surface;
detecting a current position of the battery, and comparing the current position of the battery with a target position to obtain a deviation value therebetween;
grabbing the wire harness plate at the grabbing position and controlling, according to the deviation value, the wire harness plate to move, so as to compensate for an offset between the battery and the wire harness plate; and
assembling the wire harness plate to the battery.

In some embodiments, the step of positioning the wire harness plate at the grabbing position of the carrying surface specifically includes:
controlling a first positioning member to drive the wire harness plate to move along a first direction; and
controlling a second positioning member to drive the wire harness plate to move along a second direction, so as to position the wire harness plate at the grabbing position, where the first direction intersects with the second direction and both are parallel to the carrying surface.

In some embodiments, the step of grabbing the wire harness plate on the grabbing position and controlling, according to the deviation value, the wire harness plate to move, so as to compensate for the offset between the battery and the wire harness plate specifically includes:
controlling a suction cup to move to a position right above the wire harness plate;
measuring a distance between the suction cup and the wire harness plate;
controlling the suction cup to move toward the wire harness plate to bring the suction cup into contact with the wire harness plate;
controlling the suction cup to adsorb the wire harness plate;
acquiring negative pressure data inside the suction cup, and determining, according to the negative pressure data, whether an adsorption between the suction cup and the wire harness plate is completed;
if the adsorption is completed, controlling the wire harness plate to move to a position right above the battery; and
controlling, according to the deviation value, the wire harness plate to move, so as to compensate for an offset between the battery and the wire harness plate.

In some embodiments, the step of assembling the wire harness plate to the battery specifically includes:
controlling the suction cup to be separated from the wire harness plate, so as to place the wire harness plate on the battery; and
controlling the suction cup to move away from the wire harness plate.

According to the assembling apparatus, the assembling method, and the battery processing device described above, the wire harness plate is placed on the carrying surface; first positioning is performed on the wire harness plate by the first positioning mechanism to position the wire harness plate at the grabbing position, and then second position is performed on the current position of the battery the second by the second positioning mechanism; the deviation value between the current position and the target position of the battery is detected through the second positioning mechanism, and the assembly position between the wire harness plate and the battery is compensated according to the deviation value. As such, after two positioning operations, the wire harness plate can be more accurately positioned at the mounting position of the battery, thereby improving the assembly precision and the assembly efficiency between the wire harness plate and the battery.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of an assembling apparatus according to one or more embodiments.
FIG. 2 is a schematic structural diagram of a first positioning mechanism in an assembling apparatus according to one or more embodiments.
FIG. 3 is a schematic structural diagram of a first positioning mechanism in an assembling apparatus according to one or more embodiments.
FIG. 4 is a schematic structural diagram of a clamp in an assembling apparatus according to one or more embodiments.
FIG. 5 is a schematic structural diagram of a clamp in an assembling apparatus according to one or more embodiments.
FIG. 6 is a schematic structural diagram of a jacking assembly in an assembling apparatus according to one or more embodiments.
FIG. 7 is a flowchart of an assembling method according to one or more embodiments.

Description of reference numerals: 100, assembling apparatus; 200, wire harness plate; 300, battery; 10, carrying platform; 20, first positioning mechanism; 30, second positioning mechanism; 40, conveying mechanism; 11, carrying surface; 12, grabbing position; 21, first positioning member; 22, second positioning member; 31, moving member; 32, clamp; 33, range finder; 34, detecting member; 41, conveying member; 42, jacking assembly; 321, main body; 322, suction cup; 323, vacuum generator; 421, driving member; 422, jacking member; 423, inclined surface; 424, supporting surface; 425, tray; 426, third positioning member; a, first direction; b, second direction.

### DETAILED DESCRIPTION

To make the aforementioned objects, features, and advantages of the present application more clear and comprehensible, embodiments of the present application will be described in detail in conjunction with the drawings below. In the following description, numerous specific details are set forth in order to provide a thorough understanding of the present application. The present application may, however, be implemented in many different modes other than those described herein, and those skilled in the art can make similar improvements without departing from the content of the present application. Therefore, the present application is not limited to the embodiments disclosed hereinafter.

In the description of the present application, it should be understood that if there are the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, the directional or positional relationships indicated by the terms are based on the directional or positional relationships shown in the drawings. They are merely for the convenience of describing the present application and simplifying the description, and are not intended to indicate or imply that the apparatuses or elements referred to must have specific directions or must be constructed and operated in specific directions. Therefore, these terms should not be construed as limitations on the present application.

In addition, if there are the terms "first" and "second", the terms are used for descriptive purposes only and are not to be construed as indicating or implying relative importance or to implicitly indicate the number of technical features indicated. As such, features defined by "first" or "second" may explicitly or implicitly include at least one of the features. In the description of the present application, if there is the term "a plurality of", unless otherwise explicitly limited, the term "a plurality of" means at least two, for example, two, three, and the like.

In the present application, unless otherwise explicitly specified or limited, if there are the terms "mount", "link" "connect", "fix", and the like, the terms should be construed in a broad sense. For example, unless otherwise explicitly limited, they may be a fixed connection, a detachable connection, or an integral connection; a mechanical connection or an electrical connection; or a direct connection, an indirect connection through an intermediate, internal communication between two elements, or interaction between two elements. For those of ordinary skill in the art, the specific meanings of the aforementioned terms in the present application can be understood according to specific conditions.

In the present application, unless otherwise explicitly specified or limited, if there is a description that a first feature is "above" or "below" a second feature and other similar descriptions, the meanings thereof may be that the first feature and the second feature are in direct contact, or that the first feature and the second feature are in indirect contact through an intermediate. Moreover, a first feature being "over", "above", and "on top of" a second feature may be that the first feature is right above or obliquely above the second feature, or simply mean that the first feature is at a higher horizontal level than the second feature. A first feature being "under", "below", and "at the bottom of" a second feature may be that the first feature is right under or obliquely under the second feature, or may simply mean that the first feature is at a lower horizontal level than the second feature.

It should be noted that if an element is referred to as being "fixed to" or "disposed on" another element, the element may be directly on the other element or there may be an intermediate element in between. If an element is referred to as being "connected" to another element, the element may be directly connected to the other element or there may also be an intermediate element in between. The terms "vertical", "horizontal", "upper", "lower", "left", "right", and similar descriptions, if present, are used herein for descriptive purposes only and do not necessarily represent the only implementation.

At present, judging from the development of the market situation, the application of power batteries is becoming broader. Power batteries are not only applied in energy storage power systems such as hydropower, thermal power, wind power and solar power stations, but are also widely applied in electric transportation vehicles such as electric bicycles, electric motorcycles, and electric cars, and other fields. As the application of the power batteries becomes broader, the market demand thereof is also increasing.

A battery cell is the smallest unit forming a battery. When one or a plurality of battery cells are assembled to a battery, each of the battery cells needs to be connected through wires, and the wire harness plate is required between the wires for the purpose of neat arrangement and organization, thereby creating a well-structured inner layout of the battery to facilitate the assembly or overhaul of the battery.

After the wires are organized by the wire harness plate, the wire harness plate generally needs to be fixed to the outside of the battery case, enabling the wire harness plate and the case to form an integral battery structure. However, during the current assembly process of the wire harness plate and the battery, manual operation is typically used, that is, the wire harness plate is first manually picked up and placed at a specified position of the battery, and then the wire harness plate is fixedly connected to the battery to complete the assembly of the wire harness plate.

During this process, manual operation faces the problems of poor operation precision and low operation efficiency. In addition, since the wire harness plate is configured to organize the wires, there are safety issues during manual operation. In case of any misoperation, the wire harness plate is prone to a short circuit.

Based on the aforementioned considerations, in order to solve the problems of poor operation efficiency and low assembly precision during the assembly process of the wire harness plate and the battery, one or more embodiments of the present application provide an assembling apparatus. According to the assembling apparatus, a wire harness plate is placed on a carrying surface; first positioning is performed on the wire harness plate by a first positioning mechanism to position the wire harness plate at a grabbing position, and then second positioning is performed on a current position of the battery by a second positioning mechanism; a deviation value between the current position and a target position of the battery is detected through the second positioning mechanism, and an assembly position between the wire harness plate and the battery is compensated according to the deviation value. As such, after two positioning operations, the wire harness plate can be more accurately positioned at the mounting position of the battery, thereby improving the assembly precision and the assembly efficiency between the wire harness plate and the battery.

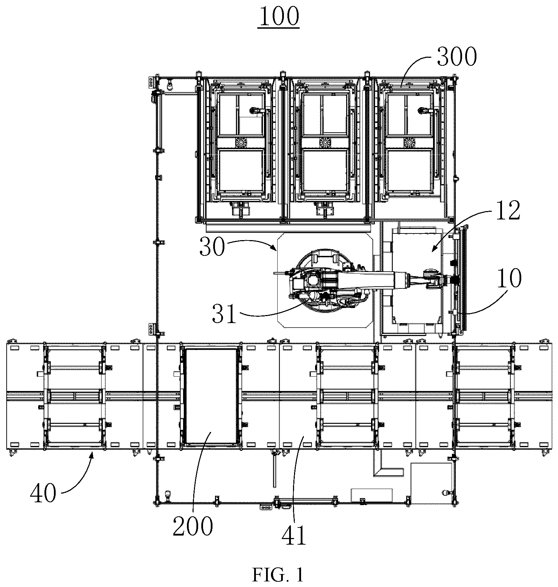

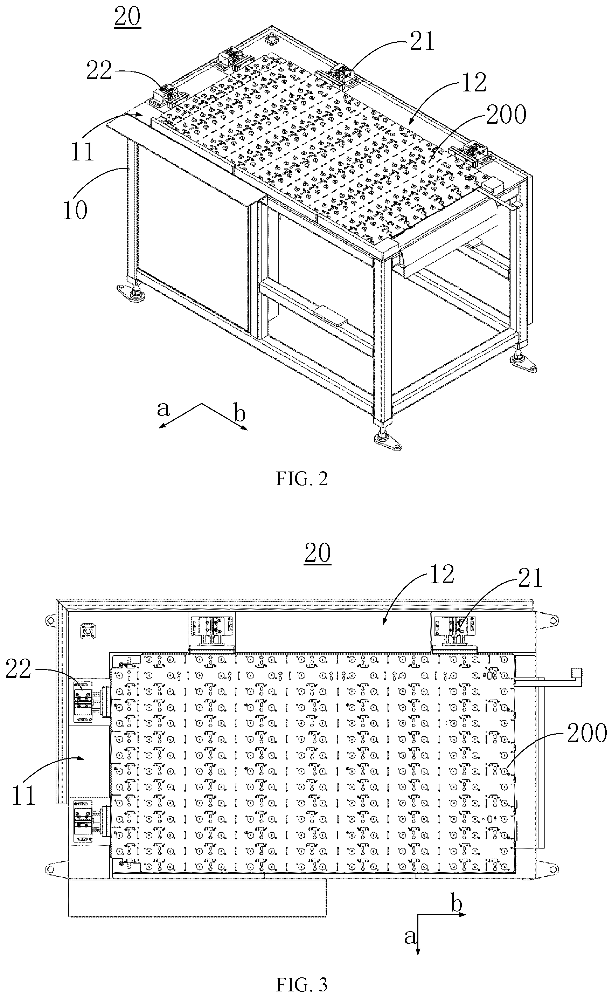

Referring to FIGs. 1, 2, and 3, an embodiment of the present application provides an assembling apparatus 100 for assembling a wire harness plate 200 to a battery 300. The assembling apparatus 100 includes a carrying platform 10, a first positioning mechanism 20, and a second positioning mechanism 30. The carrying platform 10 includes a carrying surface 11 for carrying the wire harness plate 200, and the carrying surface 11 is provided with a grabbing position 12. The first positioning mechanism 20 is movably disposed on the carrying platform 10 and is configured to position the wire harness plate 200 at the grabbing position 12. The second positioning mechanism 30 is disposed on one side of the carrying platform 10 and is configured to be capable of detecting a current position of the battery 300 and assembling, according to a deviation value between the current position and a target position, the wire harness plate 200 at the grabbing position 12 to the battery 300.

It should be noted that the carrying platform 10 is a structure that can provide a supporting base for the wire harness plate 200 as well as a mounting base for the first positioning mechanism 20 and the second positioning mechanism 30. The carrying surface 11 may be configured as the top surface of the carrying platform 10 and is disposed horizontally, so as to place the wire harness plate 200.

The carrying surface 11 is provided with the grabbing position 12. The first positioning mechanism 20 can move relative to the carrying platform 10 and drive the wire harness plate 200 on the carrying surface 11 to move synchronously during the movement, thereby positioning the wire harness plate 200 on the grabbing position 12.

Further, in order to realize the assembly between the wire harness plate 200 and the battery 300, the battery 300 may be disposed on the same side of the carrying platform 10 and the second positioning mechanism 30. Specifically, the battery 300 may be disposed on a conveying member 41 or on a material trolley, and is finally disposed on the same side of the carrying platform 10 and the second positioning mechanism 30.

The second positioning mechanism 30 first detects the current position of the battery 300. Prior to this, the target position is set in advance, that is, after the second positioning mechanism 30 grabs the wire harness plate 200 from the grabbing position 12, the wire harness plate 200 and the battery 300 are assembled at the target position.

However, during actual operation, there is usually a certain deviation between the current position and the target position of the battery 300. Therefore, the current position of the battery 300 is first detected through the second positioning mechanism 30, and then the current position is compared with the target position to obtain the deviation value therebetween.

Further, after grabbing the wire harness plate 200 from the grabbing position 12, the second positioning mechanism 30 drives the wire harness plate 200 to move toward the battery 300 and compensates for the deviation value during the movement. After the compensation, the second positioning mechanism 30 assembles the wire harness plate 200 to the battery 300, such that the error caused by the offset of the current position of the battery 300 can be compensated, thereby making the assembly between the wire harness plate 200 and the battery 300 more precise.

In addition, after the wire harness plate 200 is placed on the carrying surface 11, the process where the first positioning mechanism 20 drives the wire harness plate 200 to move, so as to position the wire harness plate 200 at the grabbing position 12 can also improve the precision of subsequent assembly between the wire harness plate 200 and the battery 300.

Specifically, if the initial positions of the wire harness plates 200 are inconsistent, when the second positioning mechanism 30 grabs the wire harness plates 200, varying degrees of offset will occur between the wire harness plates 200 and the second positioning mechanism 30. In this case, during the process where the second positioning mechanism 30 assembles the wire harness plate 200 to the battery 300, the offsets in the two steps accumulate, which will further increase the assembly error between the wire harness plate 200 and the battery 300.

Therefore, with the aforementioned structure, the first positioning mechanism 20 may position the wire harness plate 200 at the grabbing position 12 on the carrying surface 11, thereby realizing the first positioning step during the assembling process. Then, the current position of the battery 300 is detected through the second positioning mechanism 30, and a derivation value between the current position and a target position of the battery 300 is obtained through comparison. In this case, the second positioning mechanism 30 grabs the wire harness plate 200 from the grabbing position 12 and drives the wire harness plate 200 to move. During the movement, the assembly position between the wire harness plate 200 and the battery 300 can be compensated according to the deviation value, thereby realizing the second positioning during the assembly process. Finally, the assembly precision and the assembly efficiency between the wire harness plate 200 and the battery 300 are improved through two positioning operations.

In some embodiments, the first positioning mechanism 20 includes a first positioning member 21 and a second positioning member 22 both disposed on the carrying platform 10, and the first positioning member 21 and the second positioning member 22 define, in an enclosing manner, the grabbing position 12. The first positioning member 21 is movably disposed along the first direction a and is configured to drive the wire harness plate 200 to move along the first direction a. The second positioning member 22 is movably disposed along the second direction b and is configured to drive the wire harness plate 200 to move along the second direction b. The first direction a intersects with the second direction b and both are parallel to the carrying surface 11.

Specifically, both the first direction a and the second direction b are set along the direction parallel to the carrying surface 11, and the first direction a and the second direction b are perpendicular to each other. The first positioning member 21 may, but is not limited to, be configured as a first driving cylinder, the second positioning member 22 may, but is not limited to, be configured as a second driving cylinder, and the grabbing position 12 is formed between the first driving cylinder and the second driving cylinder.

When the wire harness plate 200 is placed on the carrying surface 11, the first driving cylinder extends and retracts along the first direction a to drive the wire harness plate 200 to move along the first direction a. The second driving cylinder extends and retracts along the second direction b to drive the wire harness plate 200 to move along the second direction b. As such, through the cooperation of the first driving cylinder and the second driving cylinder, the wire harness plate 200 is positioned at the grabbing position 12.

By providing the first positioning member 21 and the second positioning member 22, the wire harness plate 200 can be driven to move along the first direction a and the second direction b, such that the wire harness plate 200 is positioned at the grabbing position 12. When the second positioning mechanism 30 grabs the wire harness plate 200, the wire harness plate 200 can be connected to a designated position on the second positioning mechanism 30. Thus, during the subsequent process where the second positioning mechanism 30 assembles the wire harness plate 200 to the battery 300, the positional offset between the wire harness plate 200 and the battery 300 is reduced, thereby improving the assembly precision.

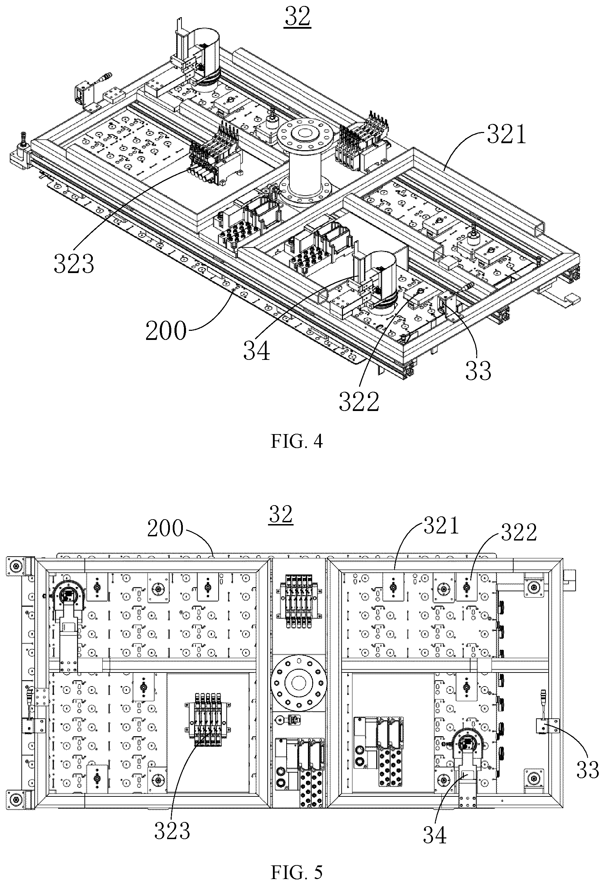

Referring to FIGs. 1, 4, and 5, in some embodiments, the second positioning mechanism 30 includes a moving member 31 and a clamp 32 disposed on the moving member 31. The clamp 32 is configured to clamp the wire harness plate 200, and the moving member 31 is configured to drive the clamp 32 and the wire harness plate 200 thereon to move.

Specifically, the moving member 31 may, but is not limited to, be configured as a mechanical arm or a transfer robot, and the clamp 32 can grab the wire harness plate 200. The clamp 32 is disposed on the moving member 31. The wire harness plate 200 is first grabbed by the clamp 32, and then the moving member 31 drives the clamp 32 and the wire harness plate 200 thereon to move synchronously.

With the aforementioned structure, the grabbing and movement of the wire harness plate 200 can be realized, such that the automatic assembly between the wire harness plate 200 and the battery 300 is realized, thereby improving the assembly efficiency.

In some embodiments, the clamp 32 includes a main body 321, a suction cup 322 disposed on the main body 321, and a vacuum generator 323. The vacuum generator 323 is configured to form a negative pressure inside the suction cup 322, and the suction cup 322 is configured to suck the wire harness plate 200.

Specifically, the main body 321 is primarily configured to provide a mounting base for the suction cup 322 and the vacuum generator 323. A plurality of suction cups 322 may be disposed to increase the adsorption area between the suction cups and the wire harness plates 200. The vacuum generator 323 is connected to all suction cups 322. When sucking the wire harness plate 200, the suction cup 322 is first brought into contact with the wire harness plate 200, and then the vacuum generator 323 is activated to form a negative pressure inside the suction cup 322, so as to allow the suction cup 322 to adsorb the wire harness plate 200. In this case, the moving member 31 can drive the clamp 32 and the wire harness plate 200 to move synchronously.

After the moving member 31 drives the wire harness plate 200 to complete the moving process, for example, when the wire harness plate 200 is moved above the battery 300, the vacuum generator 323 is controlled to complete the vacuum breaking. In this case, the negative pressure state inside the suction cup 322 is changed to the normal pressure state, which can allow the wire harness plate 200 to automatically fall off the suction cup 322, thereby realizing the separation between the wire harness plate 200 and the clamp 32.

Through the cooperation of the suction cup 322 and the vacuum generator 323, the wire harness plate 200 can be successfully grabbed and driven to move. Moreover, through the vacuum breaking of the vacuum generator 323, rapid separation between the suction cup 322 and the wire harness plate 200 can be realized, thereby completing the placement of the wire harness plate 200 on the battery 300.

In some embodiments, the second positioning mechanism 30 further includes a range finder 33 disposed on the clamp 32, and the range finder 33 is configured to measure a distance between the clamp 32 and the wire harness plate 200.

Specifically, when the wire harness plate 200 is positioned at the grabbing position 12, the moving member 31 first drives the clamp 32 to move to the position right above the wire harness plate 200 during the process where the second positioning mechanism 30 grabs the wire harness plate 200. In this case, the range finder 33 is activated to measure the spacing between the clamp 32 and the wire harness plate 200 in the vertical direction, and then the measured actual spacing is compared with a preset target spacing through the second positioning mechanism 30. After that, the moving member 31 drives, according to the comparison result, the clamp 32 to move, such that the suction cup 322 is adhered to the upper surface of the wire harness plate 200.

In this case, the vacuum generator 323 is activated to form a negative pressure inside the suction cup 322, thereby completing the adsorption of the wire harness plate 200.

In addition, during the process where the suction cup 322 adsorbs the wire harness plate 200, the second positioning mechanism 30 may also determine the adsorption state between the suction cup 322 and the wire harness plate 200 according to the negative pressure data fed back by the vacuum generator 323, so as to ensure that the suction cup 322 has successfully adsorbed the wire harness plate 200, thus realizing more stable adsorption and movement of the wire harness plate 200.

By providing the range finder 33, the distance between the clamp 32 and the wire harness plate 200 can be accurately measured, which not only enables faster absorption of the wire harness plate 200 by the suction cup 322, but also enhances the stability of the suction cup 322 in adsorbing the wire harness plate 200.

In some embodiments, the second positioning mechanism 30 further includes a detecting member 34 disposed on the clamp 32, and the detecting member 34 is configured to detect the deviation value between the current position and the target position of the battery 300.

Specifically, the detecting member 34 may include a vision camera disposed on the main body 321. The moving member 31 first drives the clamp 32 to move to the position right above the battery 300, the vision camera detects the current position of the battery 300, and then the current position is compared with the target position to obtain the deviation value therebetween.

As such, after the suction cup 322 sucks the wire harness plate 200 on the grabbing position 12, the movement position of the wire harness plate 200 can be compensated according to the deviation value between the current position detected by the vision camera and the target position during the process where the moving member 31 drives the wire harness plate 200 to move, so as to compensate for the deviation value when the wire harness plate 200 is assembled to the battery 300, thereby ensuring more precise assembly between the wire harness plate 200 and the battery 300.

By providing the detecting member 34, the deviation value between the current position and the target position of the battery 300 can be detected, such that the deviation value can be compensated during the process where the second positioning mechanism 30 drives the wire harness plate 200 to move toward the battery 300, thereby ensuring more precise assembly between the wire harness plate 200 and the battery 300.

In some embodiments, the assembling apparatus 100 further includes a control assembly (not shown in the drawings). The control assembly is in communication connection with the detecting member 34 and the moving member 31 and is configured to, according to the deviation value, control the moving member 31 to move.

Specifically, the control assembly may be configured as a controller and is in communication connection with the vision camera and the moving member 31. After detecting the current position of the battery 300, the vision camera transmits the information of the current position to the controller, and the controller compares the current position with the target position to obtain the deviation value therebetween. Then, the controller controls the moving member 31 to compensate for the deviation value, such that the final assembly position between the wire harness plate 200 and the battery 300 is more accurate.

Further, the controller may also be in communication connection with the range finder 33. After measuring the distance between the clamp 32 and the wire harness plate 200, the range finder 33 transmits the distance data to the controller, and the controller compares the data with the preset distance, and then controls, according to the comparison result, the moving member 31 to move, such that the suction cup 322 can be better adhered to the wire harness plate 200.

Then, the controller may also be in communication connection with the vacuum generator 323 and control the vacuum generator 323 to be activated or deactivated. When activated, the vacuum generator 323 forms a negative pressure state inside the suction cup 322, so as to enable the suction cup 322 to adsorb the wire harness plate 200. When deactivated, the vacuum generator 323 completes the vacuum breaking, and the negative pressure state inside the suction cup 322 is changed to the normal pressure state, allowing the suction cup 322 to be separated from the wire harness plate 200.

By providing the control assembly, automatic control can be realized, so as to realize the automatic movement and the automatic assembly of the wire harness plate 200, thereby improving the assembly efficiency.

In some embodiments, the assembling apparatus 100 further includes a conveying mechanism 40. The conveying mechanism 40 is disposed on one side of the carrying platform 10 and is configured to convey the wire harness plate 200. The second positioning mechanism 30 is further configured to be capable of moving the wire harness plate 200 to a carrying surface 11 from the conveying mechanism 40.

Specifically, the conveying mechanism 40 is disposed on the same side of the second positioning mechanism 30 and the carrying platform 10, and can be configured to convey a plurality of wire harness plates 200. The second positioning mechanism 30 can grab the wire harness plates 200 from the conveying mechanism 40, then drive the wire harness plates 200 to move, and place the wire harness plates 200 on the carrying surface 11 of the carrying platform 10.

By providing the conveying mechanism 40, a plurality of wire harness plates 200 can be driven to move simultaneously, and meanwhile, the wire harness plates 200 are grabbed through the second positioning mechanism 30, such that the assembly efficiency can be improved.

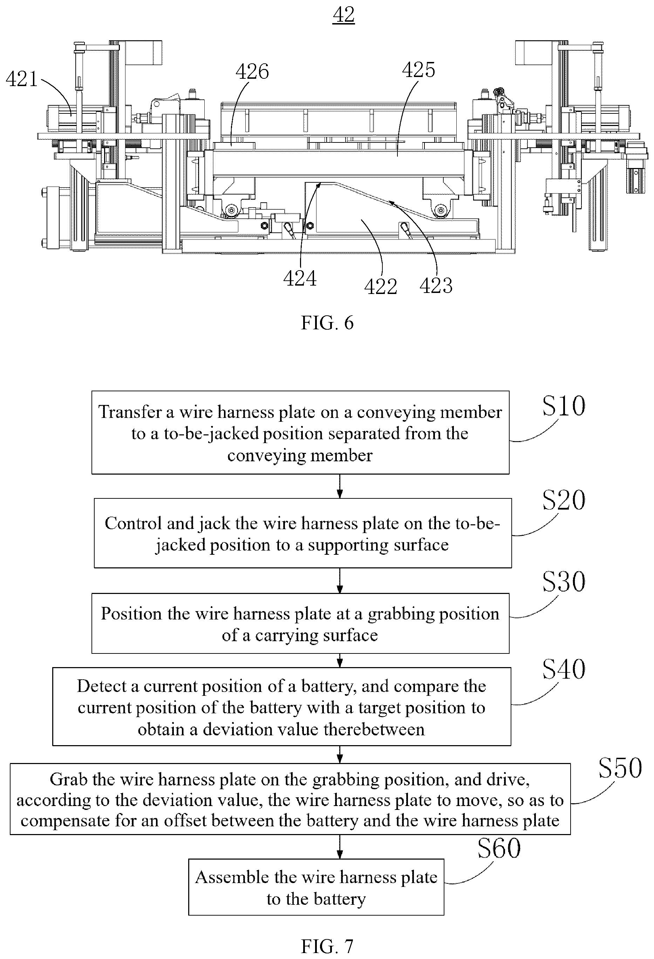

Referring to FIGs. 1 and 6, in some embodiments, the conveying mechanism 40 includes a conveying member 41 and a jacking assembly 42. The conveying member 41 is configured to convey the wire harness plate 200, and the jacking assembly 42 is configured to jack the wire harness plate 200 on the conveying member 41.

Specifically, the conveying member 41 may be configured as a conveyor belt. A plurality of wire harness plates 200 are sequentially placed on the conveyor belt and are driven to move by the conveyor belt. The jacking assembly 42 may be disposed on one side of the conveyor belt along the direction intersecting with the conveying direction of the conveyor belt. When one of the wire harness plates 200 is driven to move by the conveyor belt to the designated position, the wire harness plate 200 is jacked upward from the conveyor belt by a certain height by the jacking assembly 42, such that the wire harness plate 200 is separated from the conveyor belt, so as to facilitate the second positioning mechanism 30 to grab the wire harness plate 200 and place the wire harness plate on the carrying surface 11.

By providing the conveying member 41 and the jacking assembly 42, synchronous conveyance of the plurality of wire harness plates 200 can be realized. Moreover, the wire harness plate 200 is separated from the conveying member 41 through jacking, such that second positioning mechanism 30 grabs the wire harness plate 200 without interfering with the continued conveyance of other wire harness plates 200, thereby further improving the production efficiency of the battery 300.

In some embodiments, the jacking assembly 42 includes a driving member 421 and a jacking member 422. The jacking member 422 is provided with an inclined surface 423 and a supporting surface 424. The inclined surface 423 is obliquely disposed in a vertical direction, and the supporting surface 424 is horizontally disposed and is connected to a top end of the inclined surface 423. The driving member 421 is configured to drive the wire harness plate 200 to climb from the inclined surface 423 to the supporting surface 424.

Specifically, the driving member 421 may be configured as a driving cylinder and is movably disposed along the horizontal direction. As such, the driving member 421 may push the wire harness plate 200 on the conveyor belt to the jacking member 422 along the horizontal direction.

Further, the driving member 421 pushes the wire harness plate 200 on the conveyor belt to the inclined surface 423 along the horizontal direction, and then continues to push the wire harness plate 200 along the inclined surface 423, allowing the wire harness plate 200 to move upward along the inclined surface 423 until the wire harness plate 200 moves to the horizontally disposed supporting surface 424 and is fixed on the supporting surface 424.

As such, the driving member 421 pushes the wire harness plate 200 on the conveyor belt to the inclined surface 423 along the horizontal direction, and pushes the wire harness plate 200 to climb to the supporting surface 424 along the inclined surface 423. Then, the second positioning mechanism 30 grabs the wire harness plate 200 from the supporting surface 424 and places the wire harness plate 200 on the carrying surface 11.

By providing the driving member 421 and the jacking member 422, the wire harness plate 200 can be moved from the conveyor belt to the supporting surface 424, such that the wire harness plate 200 is separated from the conveyor belt, and the grabbing and movement of the wire harness plate 200 are realized without interfering with the continued conveyance of the conveyor belt. In addition, the jacking member 422 cooperates with the driving member 421 through the inclined surface 423 and the supporting surface 424, so as to realize the jacking of the wire harness plate 200 in the vertical direction, which can save the vertical mounting space, making the overall structure of the assembling apparatus 100 more compact and occupy less space.

In some embodiments, the jacking assembly 42 further includes a tray 425 for carrying the wire harness plate 200. A third positioning member 426 is disposed in a protruding manner on a surface of the tray 425 on a side facing the wire harness plate 200, and the third positioning member 426 is configured to be inserted into a positioning hole on the wire harness plate 200, so as to position the wire harness plate during the jacking process of the wire harness plate 200.

Specifically, the third positioning member 426 is disposed in a protruding manner on the top surface of the tray 425. The third positioning member 426 may be, but is not limited to, a pin, and a positioning hole fitted with the pin is formed on the bottom surface of the wire harness plate 200.

Before the driving member 421 drives the wire harness plate 200 to be jacked, the pin on the tray 425 is first inserted into the positioning hole of the wire harness plate 200, such that the tray 425 is in insertion fit with the wire harness plate 200, thus ensuring stable connection therebetween. Then, the driving member 421 is controlled to push the tray 425 and the wire harness plate 200 to climb together to the supporting surface 424 along the inclined surface 423, and finally allow them to be fixed on the supporting surface 424.

As such, during the jacking process of the wire harness plate 200, the wire harness plate 200 can be supported on the tray 425 through the insertion fit between the third positioning member 426 and the positioning hole, such that the wire harness plate 200 is more stable during jacking.

In some embodiments, the third positioning member 426 is retractably disposed on the tray 425 along a protruding direction thereof.

Specifically, the pin is retractably disposed on the tray 425 along the vertical direction. Before the insertion fit, the pin is in a retracted state. Before the wire harness plate 200 is jacked, the pin extends upward, such that the pin is successfully inserted into the positioning hole on the wire harness plate 200, thereby completing the insertion fit therebetween.

With the aforementioned structure, the third positioning member 426 can be more flexibly controlled to be inserted into or removed from the positioning hole, so as to facilitate the insertion fit and separation between the tray 425 and the wire harness plate 200.

Based on the same concept as the assembling apparatus 100 described above, the present application further provides a battery 300 processing device including the assembling apparatus 100 as described above. The assembling apparatus 100 is configured to assemble the wire harness plate 200 to the battery 300.

As shown in FIG. 7, based on the same concept as the assembling apparatus 100 described above, the present application further provides an assembling method, including the following steps:
S30: A wire harness plate 200 is positioned at a grabbing position 12 of a carrying surface 11.

Specifically, a first positioning mechanism 20 is controlled to drive the wire harness plate 200 on the carrying surface 11 to move, so as to position the wire harness plate 200 at the grabbing position 12 on the carrying surface 11, thereby facilitating the subsequent grabbing and positioning of the wire harness plate 200.

S40: A current position of a battery 300 is detected and compared with a target position to obtain a deviation value therebetween.

In order to make an assembly position between the wire harness plate 200 and the battery 300 more accurate, the battery 300 generally needs to be positioned at the target position. However, during actual operation, there is usually a deviation, resulting in a certain offset between the current position and the target position of the battery 300.

The current position of the battery 300 may be detected by the vision camera in the second positioning mechanism 30 and compared with the target position to obtain the deviation value therebetween, which is the actual offset of the battery 300.

S50: The wire harness plate 200 at the grabbing position 12 is grabbed, and the wire harness plate 200 is driven, according to the deviation value, to move, so as to compensate for an offset between the battery 300 and the wire harness plate 200.

The clamp 32 in the second positioning mechanism 30 is controlled to grab the wire harness plate 200 from the grabbing position 12, and the clamp 32 and the wire harness plate 200 are driven to move synchronously by the moving member 31. During the movement, the second positioning mechanism 30 drives, according to the deviation value between the current position and the target position of the battery 300, the wire harness plate 200 to move a corresponding distance, so as to compensate for the actual offset of the battery 300, thereby making the assembly position between the wire harness plate 200 and the battery 300 more accurate.

S60: The wire harness plate 200 is assembled to the battery 300.

After the final position of the wire harness plate 200 is determined, the second positioning mechanism 30 is controlled to place the wire harness plate 200 on the battery 300, so as to complete the assembly between the wire harness plate 200 and the battery 300.

In some embodiments, in the step S30, the method specifically includes:
S31: A first positioning member 21 is controlled to drive the wire harness plate 200 to move along a first direction a.
S32: A second positioning member 22 is controlled to drive the wire harness plate 200 to move along a second direction b, so as to position the wire harness plate 200 at the grabbing position 12. The first direction a intersects with the second direction b and both are parallel to the carrying surface 11.

Specifically, both the first direction a and the second direction b are horizontal directions and are perpendicular to each other.

The first positioning member 21 may be configured as the first driving cylinder that drives the wire harness plate 200 to move along the first direction a. The second positioning member 22 may be configured as the second driving cylinder that drives the wire harness plate 200 to move along the second direction b. As such, through the cooperation of the first driving cylinder and the second driving cylinder, the wire harness plate 200 is positioned at the grabbing position 12.

Through the cooperation of the first positioning member 21 and the second positioning member 22, the wire harness plate 200 can be driven to move along the first direction a and the second direction b, such that the wire harness plate 200 is positioned at the grabbing position 12. When the second positioning mechanism 30 grabs the wire harness plate 200, the wire harness plate 200 can be connected to a designated position on the second positioning mechanism 30. Thus, during the subsequent process where the second positioning mechanism 30 assembles the wire harness plate 200 to the battery 300, the positional offset between the wire harness plate 200 and the battery 300 is reduced, thereby improving the assembly precision.

In some embodiments, in the step S50, the method specifically includes:
S51: A suction cup 322 is controlled to be moved to a position right above the wire harness plate 200.

Specifically, the suction cup 322 is driven to move through the moving member 31 in the second positioning mechanism 30. The moving member 31 may, but is not limited to, be configured as the mechanical arm or the transfer robot. The suction cup 322 is disposed on the main body 321 of the clamp 32, and a plurality of suction cups 322 may be disposed to increase the adsorption area between the suction cups and the wire harness plate 200, thereby enhancing the adsorption stability.

S52: A distance between the suction cup 322 and the wire harness plate 200 is measured.

Specifically, when the wire harness plate 200 is positioned at the grabbing position 12, the moving member 31 first drives the suction cup 322 to move to the position right above the wire harness plate 200. The range finder 33 is disposed on the main body 321 of the clamp 32. The range finder 33 is activated to measure the spacing between the suction cup 322 and the wire harness plate 200 in the vertical direction, and then the measured actual spacing is compared with the preset target spacing through the second positioning mechanism 30.

S53: The suction cup 322 is controlled to move toward a direction proximal to the wire harness plate 200 to bring the suction cup 322 into contact with the wire harness plate 200.

After comparing the actual spacing between the suction cup 322 and the wire harness plate 200 with the preset target spacing, the moving member 31 drives, according to the comparison result, the suction cup 322 to move, such that the suction cup 322 is adhered to the upper surface of the wire harness plate 200.

S54: The suction cup 322 is controlled to adsorb the wire harness plate 200.

Specifically, the vacuum generator 323 is further disposed on the main body 321. The vacuum generator 323 is connected to the suction cup 322 and can form a negative pressure or change a negative pressure to a normal pressure inside the suction cup 322.

After the suction cup 322 is adhered to the upper surface of the wire harness plate 200, the controller activates the vacuum generator 323 to form a negative pressure inside the suction cup 322, such that the suction cup 322 can stably adsorb the wire harness plate 200.

S55: Negative pressure data inside the suction cup 322 is acquired, and whether an adsorption between the suction cup 322 and the wire harness plate 200 is completed is determined according to the negative pressure data.

During the process where the suction cup 322 adsorbs the wire harness plate 200, the vacuum generator 323 can acquire the negative pressure data inside the suction cup 322 and transmit the negative pressure data inside the suction cup 322 to the controller, and the controller determines the adsorption state between the suction cup 322 and the wire harness plate 200 according to the negative pressure data to ensure that the suction cup 322 has stably adsorbed the wire harness plate 200.

S56: If the adsorption is completed, the wire harness plate 200 is controlled to move to a position right above the battery 300.

Specifically, the moving member 31 is controlled to move by the controller, such that the suction cup 322 and the wire harness plate 200 adsorbed thereon are driven to move synchronously to the position right above the battery 300.

S57: The wire harness plate 200 is controlled, according to the deviation value, to move, so as to compensate for an offset between the battery 300 and the wire harness plate 200.

During the process where the moving member 31 drives the wire harness plate 200 to move, the position of the wire harness plate 200 is compensated according to the deviation value. After the compensation, the deviation of the current position of the battery 300 can be compensated, thereby making the assembly between the wire harness plate 200 and the battery 300 more accurate.

In some embodiments, in the step S60, the method specifically includes:
S61: The suction cup 322 is controlled to be separated from the wire harness plate 200, so as to place the wire harness plate 200 on the battery 300.
S62: The suction cup 322 is controlled to move toward a direction distal to the wire harness plate 200.

Specifically, after the moving member 31 drives the clamp 32 to move above the battery 300 and the position of the wire harness plate 200 is determined, the controller controls the vacuum generator 323 to complete the vacuum breaking, allowing negative pressure in the internal environment of the suction cup 322 to change to normal pressure. In this case, the absorption force of the suction cup 322 disappears, and the wire harness plate 200 is separated from the suction cup 322, so as to place the wire harness plate 200 on the battery 300.

The moving member 31 is controlled to drive the clamp 32 to move toward the direction distal to the wire harness plate 200, such that the suction cup 322 is successfully separated from the wire harness plate 200, and the moving member 31 can be configured to grab the next wire harness plate 200.

In some embodiments, before the step S30, the method further includes the following steps:
S10: A wire harness plate 200 on a conveying member 41 is transferred to a to-be-jacked position separated from the conveying member 41.
S20: The wire harness plate 200 on the to-be-jacked position is controlled to be jacked to a supporting surface 424.

Specifically, the conveying mechanism 40 is disposed on the same side of the second positioning mechanism 30 and the carrying platform 10, and includes the conveying member 41 and the jacking assembly 42. The conveying member 41 may be configured to convey a plurality of wire harness plates 200. The second positioning mechanism 30 can grab the wire harness plates 200 from the conveying mechanism 40, then drive the wire harness plates 200 to move, and place the wire harness plates 200 on the carrying surface 11 of the carrying platform 10.

By providing the conveying mechanism 40, a plurality of wire harness plates 200 can be driven to move simultaneously, and meanwhile, the wire harness plates 200 are grabbed through the second positioning mechanism 30, such that the assembly efficiency can be improved.

When one of the wire harness plates 200 on the conveying member 41 moves to the position corresponding to the first positioning mechanism 20, the wire harness plate 200 is transferred from the conveying member 41 to the to-be-jacked position separated from the conveying member 41, allowing the wire harness plate 200 to be separated from the conveying member 41. In this case, the conveying member 41 can continue to convey other wire harness plates.

A third positioning member 426 protrudes upward and is inserted into a positioning hole of the wire harness plate 200, realizing an insertion fit between a tray 425 and the wire harness plate 200.

The driving member 421 pushes the wire harness plate 200 from the conveyor belt to the inclined surface 423 along the horizontal direction, then continues to push the wire harness plate 200 to climb to the supporting surface 424 along the inclined surface 423, and finally allows the wire harness plate to be fixed on the supporting surface 424. Then, the second positioning mechanism 30 is controlled to grab the wire harness plate 200 from the supporting surface 424 and place the wire harness plate on the carrying surface 11.

According to one or more embodiments, the wire harness plate 200 is first conveyed by the conveyor belt. The driving member 421 is controlled to push the wire harness plate 200 from the conveyor belt to the inclined surface 423 along the horizontal direction, then continue to push the wire harness plate 200 to climb to the supporting surface 424 along the inclined surface 423, and finally allow the wire harness plate to be fixed on the supporting surface 424.

The moving member 31 drives the clamp 32 to move to the position right above the wire harness plate 200 on the supporting surface 424. The controller activates the range finder 33 to measure the distance between the clamp 32 and the wire harness plate 200 and feeds the measured distance back to the controller. Then, the controller controls, according to the measurement result, the moving member 31 to drive the clamp 32 to move, such that the suction cup 322 on the clamp 32 is adhered to the upper surface of the wire harness plate 200.

The controller activates the vacuum generator 323 to form a negative pressure inside the suction cup 322, allowing the suction cup 322 to adsorb the wire harness plate 200. The moving member 31 drives the suction cup 322 and the wire harness plate 200 to rise and move to the position right above the carrying surface 11. The vacuum generator 323 is controlled to complete the vacuum breaking, allowing negative pressure in the internal environment of the suction cup 322 to change to normal pressure. In this case, the suction cup 322 is separated from the wire harness plate 200, so as to place the wire harness plate 200 on the carrying surface 11.

The first positioning member 21 drives the wire harness plate 200 to move along the first direction a, and the second positioning member 22 drives the wire harness plate 200 to move along the second direction b, so as to position the wire harness plate 200 at the grabbing position 12. Meanwhile, the moving member 31 drives the clamp 32 to move to the position right above the battery 300, the vision camera detects the current position of the battery 300, and the controller compares the current position of the battery 300 with the target position to obtain the deviation value therebetween.

The moving member 31 is controlled to move to the position right above the grabbing position 12. The range finder 33 is activated again to measure the distance between the clamp 32 and the wire harness plate 200, and the moving member 31 drives, according to the measured distance, the suction cup 322 to move and adhere to the upper surface of the wire harness plate 200. The vacuum generator 323 is activated to form a negative pressure inside the suction cup 322, thereby adsorbing the wire harness plate 200.

The moving member 31 drives the wire harness plate 200 to move, and during the movement, the moving member controls, according to the deviation value between the current position of the battery 300 detected by the vision camera and the target position, the wire harness plate 200 to move the corresponding distance, so as to compensate for the positional deviation between the wire harness plate 200 and the battery 300.

After the position of the wire harness plate 200 is finally determined, the moving member 31 drives the wire harness plate 200 to move downward to the position proximal to the battery 300, and then the vacuum generator 323 is controlled to complete the vacuum breaking, allowing the suction cup 322 to be separated from the wire harness plate 200, thereby placing the wire harness plate 200 on the battery 300, so as to assemble the wire harness plate 200 to the battery 300.

The various technical features in the aforementioned embodiments may be randomly combined. For concise description, not all possible combinations of the various technical features in the aforementioned embodiments are described. However, provided that combinations of these technical features do not conflict with each other, the combinations of the various technical features are considered as falling within the scope of this specification.

The aforementioned embodiments merely illustrate several implementations of the present application, which are described in a specific and detailed manner, but should not be construed as limiting the scope of the present application. It should be noted that various modifications and improvements can be made by those of ordinary skill in the art without departing from the concept of the present application, and these modifications and improvements are all within the protection scope of the present application. Therefore, the protection scope of the present application shall be subjected to the appended claims.

## Claims

1. An assembling apparatus for assembling a wire harness plate to a battery, the assembling apparatus comprising:
a carrying platform, comprising a carrying surface for carrying the wire harness plate, the carrying surface being provided with a grabbing position;
a first positioning mechanism, movably disposed on the carrying platform and configured to position the wire harness plate at the grabbing position;
a second positioning mechanism, disposed on one side of the carrying platform and configured to be capable of detecting a current position of the battery and assembling, according to a deviation value between the current position and a target position, the wire harness plate at the grabbing position to the battery; and
a conveying mechanism, disposed on one side of the carrying platform and configured to convey the wire harness plate, the conveying mechanism comprising a conveying member and a jacking assembly, the conveying member being configured to convey the wire harness plate, and the jacking assembly being configured to jack the wire harness plate on the conveying member; the jacking assembly comprising a tray for carrying the wire harness plate, a third positioning member being disposed in a protruding manner on a surface of the tray on a side facing the wire harness plate, and the third positioning member being configured to be inserted into a positioning hole on the wire harness plate, so as to position the wire harness plate during the jacking process of the wire harness plate,
wherein the second positioning mechanism is further configured to be capable of moving the wire harness plate from the conveying mechanism to the carrying surface .

2. The assembling apparatus according to claim 1, wherein the first positioning mechanism comprises a first positioning member and a second positioning member both disposed on the carrying platform, and the first positioning member and the second positioning member define, in an enclosing manner, the grabbing position,
wherein the first positioning member is movably disposed along a first direction and is configured to drive the wire harness plate to move along the first direction; and the second positioning member is movably disposed along a second direction and is configured to drive the wire harness plate to move along the second direction;
the first direction intersects with the second direction and both are parallel to the carrying surface.

3. The assembling apparatus according to claim 1 or 2, wherein the second positioning mechanism comprises a moving member and a clamp disposed on the moving member, the clamp is configured to clamp the wire harness plate, and the moving member is configured to drive the clamp and the wire harness plate thereon to move.

4. The assembling apparatus according to claim 3, wherein the clamp comprises a main body, a suction cup disposed on the main body, and a vacuum generator, the vacuum generator is configured to form a negative pressure inside the suction cup, and the suction cup is configured to suck the wire harness plate.

5. The assembling apparatus according to claim 3 or 4, wherein the second positioning mechanism further comprises a range finder disposed on the clamp, and the range finder is configured to measure a distance between the clamp and the wire harness plate.

6. The assembling apparatus according to any one of claims 3 to 5, wherein the second positioning mechanism further comprises a detecting member disposed on the clamp, and the detecting member is configured to detect the deviation value between the current position and the target position of the battery.

7. The assembling apparatus according to claim 6, wherein the assembling apparatus further comprises a control assembly, and the control assembly is in communication connection with the detecting member and the moving member and is configured to control, according to the deviation value, the moving member to move.

8. The assembling apparatus according to any one of claims 1 to 7, wherein the jacking assembly further comprises a driving member and a jacking member, the jacking member is provided with an inclined surface and a supporting surface, the inclined surface is obliquely disposed in a vertical direction, the supporting surface is horizontally disposed and is connected to a top end of the inclined surface, and
the driving member is configured to drive the wire harness plate to climb from the inclined surface to the supporting surface.

9. The assembling apparatus according to any one of claims 1 to 8, wherein the third positioning member is retractably disposed on the tray along a protruding direction thereof.

10. A battery processing device, comprising the assembling apparatus according to any one of claims 1 to 9, the assembling apparatus being configured to assemble a wire harness plate to a battery.

11. An assembling method, comprising the following steps:
transferring a wire harness plate on a conveying member to a to-be-jacked position separated from the conveying member;
controlling and jacking the wire harness plate on the to-be-jacked position to a supporting surface;
controlling a third positioning member to be inserted into a positioning hole of the wire harness plate, so as to realize an insertion fit between a tray and the wire harness plate;
controlling a second positioning mechanism to move the wire harness plate to a carrying surface;
positioning the wire harness plate at a grabbing position of the carrying surface;
detecting a current position of the battery, and comparing the current position of the battery with a target position to obtain a deviation value therebetween;
grabbing the wire harness plate at the grabbing position and controlling, according to the deviation value, the wire harness plate to move, so as to compensate for an offset between the battery and the wire harness plate; and
assembling the wire harness plate to the battery.

12. The assembling method according to claim 11, wherein the step of positioning the wire harness plate at the grabbing position of the carrying surface specifically comprises:
controlling a first positioning member to drive the wire harness plate to move along a first direction; and
controlling a second positioning member to drive the wire harness plate to move along a second direction, so as to position the wire harness plate at the grabbing position, wherein the first direction intersects with the second direction and both are parallel to the carrying surface.

13. The assembling method according to claim 11 or 12, wherein the step of grabbing the wire harness plate on the grabbing position and controlling, according to the deviation value, the wire harness plate to move, so as to compensate for the offset between the battery and the wire harness plate specifically comprises:
controlling a suction cup to move to a position right above the wire harness plate;
measuring a distance between the suction cup and the wire harness plate;
controlling the suction cup to move toward the wire harness plate to bring the suction cup into contact with the wire harness plate;
controlling the suction cup to adsorb the wire harness plate;
acquiring negative pressure data inside the suction cup, and determining, according to the negative pressure data, whether an adsorption between the suction cup and the wire harness plate is completed;
if the adsorption is completed, controlling the wire harness plate to move to a position right above the battery; and
controlling, according to the deviation value, the wire harness plate to move, so as to compensate for an offset between the battery and the wire harness plate.

14. The assembling method according to any one of claims 11 to 13, wherein the step of assembling the wire harness plate to the battery specifically comprises:
controlling the suction cup to be separated from the wire harness plate, so as to place the wire harness plate on the battery; and
controlling the suction cup to move away from the wire harness plate.
